# EUROPÄISCHE PATENTSCHRIFT

(11) **EP 1 673 409 B1**
(45) Veröffentlichungstag und Bekanntmachung des Hinweises auf die Patenterteilung: **23.05.2007**
(21) Anmeldenummer: 04764669.0
(22) Anmeldetag: 01.09.2004
(51) Int. Cl.: C08L 33/12, B29C 45/00

(54) **POLYMERMISCHUNG SOWIE DEREN VERWENDUNG FÜR SPRITZGUSSTELLE**
POLYMER MIXTURE AND THE UTILIZATION THEREOF FOR INJECTION MOLDED PARTS
MELANGE POLYMERE ET SON UTILISATION POUR DES PIECES MOULEES PAR INJECTION

(30) Priorität: 17.10.2003 DE 10349142
(43) Veröffentlichungstag der Anmeldung: 28.06.2006
(73) Patentinhaber: Röhm GmbH, 64293 Darmstadt (DE)
(72) Erfinder: WICKER, Michael, 64342 Seeheim-Jugenheim (DE); SCHULTES, Klaus, 65197 Wiesbaden (DE); ALBRECHT, Klaus, 55129 Mainz (DE); HÖSS, Werner, Shanghai 200030 (CN); RÜPPEL, Mona, 64739 Höchst (DE); REINHEIMER, Eric, 64846 Gross-Zimmern (DE); FUCHS, Wolfgang, 64665 Alsbach-Hähnlein (DE); HALBLÄNDER, Tony, 64347 Griesheim (DE)
(86) Internationale Anmeldenummer: PCT/EP2004/009704
(87) Internationale Veröffentlichungsnummer: WO 2005/047392

(56) Entgegenhaltungen:
- DE-A- 19 927 769
- FR-A- 2 831 546

## Beschreibung

Die Erfindung betrifft eine Polymermischung sowie deren Verwendung für Spritzgussteile.

### Stand der Technik

Ausgehend von der Forderung nach zunehmend geringerem Kraftstoffverbrauch ist die Automobilindustrie bestrebt, das Eigengewicht von Kraftfahrzeugen immer weiter zu verringern. Während in der Vergangenheit weitestgehend Stahlteile im Kfz-Außenbereich verbaut wurden, besteht aus ökonomischen Gründen der Wunsch, diese Elemente aus Werkstoffen mit geringerer Dichte bei gleichzeitig verringertem Fertigungsaufwand herstellen zu wollen.

Das Eigenschaftsprofil dieser Formteile ist bestimmt durch ein geringes Eigengewicht bei gleichzeitig hoher Witterungsbeständigkeit, hoher Steifigkeit, guter Schlagzähigkeit, guter Maßhaltigkeit insbesondere auch bei Erwärmung im Dauergebrauchstemperaturbereich, guter Chemikalienresistenz z. B. gegen Reinigungsmittel, guter Kratzfestigkeit und hohem Glanz.

Neben dem Defizit des Eigengewichts von Stahlblech besteht bei Einsatz dieses Werkstoffes weiterhin der Nachteil, dass die Formteile einer der Fertigung nachfolgenden Lackierung unterworfen werden müssen, um eine "Class A - Oberfläche" zu erzielen. Zur Gewichtsabsenkung werden deshalb die Stahlbauteile zunehmend durch Kunststoffbauteile ersetzt, wobei gleichzeitig dem Wunsch der Kfz-Designer nach höheren gestalterischen Freiheitsgraden hinsichtlich der Bauteilgeometrie Rechnung getragen wird.

Anwendung in diesem Bereich fanden bislang verschiedene Thermoplaste wie z. B. PC, ASA, ASA/PC, PMMA und Glasfasergefüllte Polymere wie z. B. GF-Polyamid.
Da die Formteile in der Regel mittels Spritzgussverfahren produziert werden, besteht in Anbetracht der Bauteilgeometrie (lange Fließwege bei geringen Schichtdicken) bei Verwendung von Thermoplasten weiterhin die Forderung nach einer guten Fließfähigkeit der Kunststoffschmelze, um Ausschussteile zu vermeiden. Um dem Kfz-Hersteller eine weitgehend freie Farbwahl zu ermöglichen, sollte der Kunststoff außerdem nahezu keine Eigenfarbe bei hoher Lichttransmission besitzen.

Der Einsatz von glasfaserverstärkten Kunststoffen führt zwar zu Formteilen mit gutem mechanischen Eigenschaften, jedoch ist auch hier analog zu Stahl eine nachträgliche Lackierung erforderlich, um eine gleichmäßige, glänzende Class A - Oberflächenqualität zu erreichen.

Polycarbonat besitzt neben hoher Wärmeformbeständigkeit auch eine sehr gute Zähigkeit. Die mangelnde Witterungsbeständigkeit, die zu Vergilbung führt, und die geringe Oberflächenhärte erfordern jedoch auch hier eine Oberflächenlackierung. Weiterhin stellt die nicht ausreichende Steifigkeit dieses Werkstoffs ein Problem für die genannte Anwendung dar.

Eine gegenüber Polycarbonat verbesserte Witterungsbeständigkeit weisen thermoplastische Werkstoffe wie ASA, PMMA und Blends aus ASA mit PC auf. Bei ASA und ASA/PC reicht jedoch die Steifigkeit des Werkstoffs und die Oberflächenhärte, die in einer mangelnden Kratzfestigkeit resultiert, nicht aus, um den Anforderungen an die genannten Bauteile zu genügen.

Bei PMMA handelt es sich um einen Werkstoff, der eine hervorragende Witterungsbeständigkeit und optische Güte bei hoher Steifigkeit, hoher Oberflächenhärte, guter Wärmeformbeständigkeit und guter Schmelzefließfähigkeit besitzt. Für die genannte Anwendung ist jedoch die Zähigkeit von PMMA zu gering. Um dieses Defizit auszugleichen, kann PMMA durch Abmischung mit Schlagzähmodifikatoren, die aus dem Stand der Technik bekannt sind, optimiert werden. Durch diese Modifikation wird jedoch die Wärmeformbeständigkeit und Oberflächenhärte derart verringert, dass auch schlagzähmodifiziertes PMMA den Anforderungen nicht genügt.

Es ist eine Vielzahl handelsübliche Formmassen auf Polymethylmethacrylat-Basis mit guten Materialeigenschaften bekannt.

### Aufgabe und Lösung

Viele handelsübliche Formmassen auf Polymethylmethacrylat-Basis weisen an sich bereits sehr befriedigende Materialeigenschaften auf, haben jedoch den Nachteil, daß ein Eigenschaftsprofil, welches für die Herstellung von qualitativ hochwertigen Spitzgussteilen, z. B. für Automobilaußenteile, gefordert wird, kaum in allen einzelnen Anforderungen gleichermaßen erreicht wird (siehe die Vergleichsbeispiele 4 bis 9). Dies schränkt die Möglichkeiten der Verwendung solcher Teile bisher sehr ein.

Die Aufgabe der vorliegenden Erfindung bestand somit in der Bereitstellung eines thermoplastischen Werkstoffs mit ausgewogenem Eigenschaftsprofil, der die oben aufgezeigten Nachteile nicht aufweist.

Die Aufgabe wird gelöst durch eine Polymermischung, die folgende Komponenten enthält
a) ein niedermolekulares (Meth)acrylat(co)polymer,
   charakterisiert durch eine Lösungsviskosität in Chloroform bei 25 °C (ISO 1628 - Teil 6) von kleiner/gleich 55 ml/g
b) ein Schlagzähmodifizierungsmittel auf Basis von vernetzten Poly(meth)acrylaten
c) ein höhermolekulares (Meth)acrylat(co)polymer,
   charakterisiert durch eine Lösungsviskosität in Chloroform bei 25 °C (ISO 1628 - Teil 6) von größer/gleich 65 ml/g und/oder
d) ein weiteres von a) verschiedenes (Meth)acrylat(co)polymer,
   charakterisiert durch eine Lösungsviskosität in Chloroform bei 25 °C (ISO 1628 - Teil 6) von 50 bis 55 ml/g
   wobei die Komponenten a), b), c) und/oder d) jeweils für sich genommen als einzelne Polymere als auch als Mischungen von Polymeren verstanden werden können,
   wobei a) b) c) und/oder d) sich zu 100 Gew.-% addieren und in folgenden Mengenverhältnissen vorliegen: a) 25 bis 75 Gew.-% b) 10 bis 60 Gew.-% c) und/oder d) 10 bis 5 Gew.-%,
   wobei die Polymermischung noch übliche Zusatz, Hilfs- und/oder Füllstoffe enthalten kann und
   wobei ein aus der Polymermischung hergestellter Probekörper gleichzeitig folgende Eigenschaften aufweist:
   I. ein Zugmodul (ISO 527) von mindestens 2600 MPa,
   II. eine Vicaterweichungstemperatur VET (ISO 306-B50) von mindestens 109 °C,
   III. eine Schlagzähigkeit (ISO 179-2D, flatwise) von mindestens 17 KJ/m², und
   IV. einen Schmelzindex MVR (ISO 1133, 230 °C / 3,8 kg) von mindestens 1,5 cm³/10 min.

### Ausführung der Erfindung

### Die Polymermischung

Die Erfindung betrifft eine Polymermischung, die die Komponenten a), b) sowie c) und/oder d) enthält. Die Polymermischung kann somit entweder aus den Komponenten a), b) und c), oder aus den Komponenten a), b) und d) oder aus allen vier Komponenten bestehen. Die Komponenten a), b), c) und/oder d) können jeweils für sich als einzelne Polymere als auch als Mischung mehrerer Polymere der entsprechenden Definition vorliegen.

### Eigenschaften der Polymermischung

Die Komponenten a), b) sowie c) und/oder d) sind in den Mengenanteilen und in ihrer Zusammensetzung so gewählt, daß ein aus der Polymermischung hergestellter Probekörper gleichzeitig folgende Eigenschaften aufweist:
I. ein Zugmodul (ISO 527) von mindestens 2600, bevorzugt mindestens 2750, besonders bevorzugt mindestens 2850 oder 3000 MPa,
II. eine Vicaterweichungstemperatur VET (ISO 306-B50) von mindestens 109, bevorzugt mindestens 110, insbesondere mindestens 112, z. B. von 110 bis 125 °C,
III. eine Schlagzähigkeit (ISO 179-2D, flatwise) von mindestens 17, bevorzugt mindestens 18, 20, 25 oder 30 KJ/m²
IV. einen Schmelzindex MVR (ISO 1133, 230 °C / 3,8 kg) von mindestens 1,5, bevorzugt mindestens 1,65, 2,0 oder 3,0 cm³/10 min.

Übliche Zusatz, Hilfs- und/oder Füllstoffe sind so zu wählen, daß das oben genannte Eigenschaftsprofil möglichst nicht oder höchstens geringfügig beeinträchtigt wird.

### Weitere Eigenschaften

Die Komponenten a), b) sowie c) und/oder d) können weiterhin in den Mengenanteilen und in ihrer Zusammensetzung so gewählt werden, daß ein aus der Polymermischung hergestellter Probekörper auch zumindest einige der folgenden Eigenschaften aufweist:

### Eigenfarbe

Lichttransmissionsgrad T_{D65} nach DIN 5033/7 von mindestens 50, bevorzugt mindestens 55 %.

### Gelbwert

Der Gelbwert, bestimmbar nach DIN 6167 (Lichtart D65, 10° an 3 mm Schichtdicke), soll weniger als 20, bevorzugt weniger als 17 betragen.

### Chemikalienresistenz

Bruchzeit bei Benetzung der Oberfläche mit Isopropanol bei konstanter Randfaserdehnung von
■ 0,39 %: > 1800 s
■ 0,50 %: > 700 s

Bruchzeit bei Benetzung der Oberfläche mit Ethanol/Wasser-Gemisch im Verhältnis 70 : 30 bei konstanter Randfaserdehnung von
■ 0,39 %: > 1800 s
■ 0,50 %: > 200 s

### Oberflächenhärte

Ritzhärte nach Taber bei einer Auflagekraft von
■ 0,7 N: keine Oberflächenbeschäd igung detektierbar
■ 1,5 N: < 2,0 *µ*m, bevorzugt < 1,6 *µ*m
■ 3,0 N: < 6 *µ*m, bevorzugt < 5 *µ*m

### Oberflächenglanz

R (60°): > 48 %, bevorzugt > 50 %

### Mengenverhältnisse der Komponenten

Die Komponenten liegen in folgenden Mengenverhältnissen vor, die sich zu 100 Gew.-% addieren.
Komponente a) : 25 bis 75, bevorzugt 40 bis 60,
   insbesondere 45 bis 55 Gew.-%.
Komponente b) : 10 bis 60, bevorzugt 10 bis 20 Gew.-%.
Komponente c) und/oder d): 10 bis 50, bevorzugt 12 bis 40 Gew.-%.

Probekörper mit sehr hohen VET-Werten im Bereich von 116 bis 120 °C können erhalten werden wenn c) mit 30 bis 45, bevorzugt 35 bis 40 Gew.-% enthalten ist und d) bevorzugt nicht enthalten ist (siehe Beispiel 3).

Probekörper mit hohen VET-Werten, im Bereich von 114 bis 118 °C und gleichzeitig hohem Glänzgrad, R(60°) = 48 bis 50, können erhalten werden wenn sowohl c) und d) enthalten sind, bevorzugt in Mengenanteilen von c) mit 10 bis 15 Gew.-% und d) mit 15 bis 25 Gew.-% (siehe Beispiel 2)

Probekörper mit VET-Werten im Bereich von 109 bis 113 °C und gleichzeitig geringer Eigenfarbe, Lichttransmissionsgrad T_{D65} nach DIN 5033/7 im Bereich von 60 bis 65 %, können erhalten werden wenn d) mit 30 bis 40, bevorzugt 33 bis 38 Gew.-% enthalten ist und c) bevorzugt nicht enthalten ist (siehe Beispiel 1).

Die Polymermischung kann noch übliche Zusatz, Hilfs- und/oder Füllstoffe enthalten.

### Herstellung der Polymermischung

Die Polymermischung kann durch trockenes Abmischen der Komponenten, die als Pulver, Körner oder bevorzugt Granulate vorliegen können, hergestellt werden.

Die Polymermischung kann auch durch Schmelzen und Vermengen der Einzelkomponenten im Schmelzezustand oder durch Schmelzen trockener Vormischungen der Einzelkomponenten zu einer gebrauchsfertigen Formmasse verarbeitet werden erfolgen. Dies kann z. B. in Ein- oder Zweischneckenextrudern erfolgen. Das erhaltene Extrudat kann anschließend granuliert werden. Übliche Zusatz, Hilfs- und/oder Füllstoffe können direkt zugemischt oder später von Endverbraucher nach Bedarf zugegeben werden.

### Komponente a)

Die Komponente a) ist ein niedermolekulares (Meth)acrylat(co)polymer, charakterisiert durch eine Lösungsviskosität in Chloroform bei 25 °C (ISO 1628 - Teil 6) von kleiner/gleich 55, bevorzugt kleiner/gleich 50, insbesondere 45 bis 55 ml/g.

Dies kann einem Molekulargewicht M_{w} (Gewichtsmittel) von 95000 g/mol (Bestimmung von M_{w} mittels Gelpermeationschromatographie unter Bezug auf Polymethylmethacrylat als Eichstandard) entsprechen. Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente a) ist bevorzugt ein Copolymer aus Methylmethacrylat, Styrol und Maleinsäureanhydrid.

Geeignete Mengenanteile können z. B. sein:
50 bis 90, bevorzugt 70 bis 80 Gew.-% Methylmethacrylat,
10 bis 20, bevorzugt 12 bis 18 Gew.-% Styrol und
5 bis 15, bevorzugt 8 bis 12 Gew.-% Maleinsäureanhydrid

Entsprechende Copolymere können in sich bekannter Weise durch radikalische Polymerisation erhalten werden. EP-A 264 590 beschreibt z. B. ein Verfahren zur Herstellung einer Formmasse aus einem Monomerengemisch aus Methylmethacrylat, Vinylaromat, Maleinsäureanhydrid sowie gegebenenfalls aus einem niederen Alkylacrylat, bei dem die Polymerisation bis zu einem Umsatz von 50 % in An- oder Abwesenheit eines nicht polymerisierbaren organischen Lösungsmittels durchgeführt wird und bei dem die Polymerisation ab einem Umsatz von mindestens 50 % im Temperaturbereich von 75 bis 150 °C in Gegenwart eines organischen Lösungsmittels bis zu einem Umsatz von mindestens 80 % fortgesetzt wird und anschließend die niedermolekularen flüchtigen Bestandteile verdampft werden.

In JP-A 60-147 417 wird ein Verfahren zur Herstellung einer hochwärmeformbeständigen Polymethacrylat-Formmasse beschrieben, bei dem eine Monomermischung aus Methylmethacrylat, Maleinsäureanhydrid und mindestens einem Vinylaromaten in einen Polymerisationsreaktor, der für Lösungs- oder Massepolymerisation geeignet ist, bei einer Temperatur von 100 bis 180 °C eingespeist und polymerisiert wird. DE-OS 44 40 219 beschreibt ein weiteres Herstellungsverfahren.

Die Komponente a) kann z. B. hergestellt werden, indem man eine Monomermischung aus z. B. 6355 g Methylmethacrylat, 1271 g Styrol und 847 g Maleinsäureanhydrid mit 1,9 g tert.-Butylperneodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt. Das resultierende Gemisch kann in eine Polymerisationskammer gefüllt und z. B. 10 Minuten entgast werden. Danach kann im Wasserbad z. B. 6 Stunden bei 60°C, nachfolgend 30 Stunden bei 55°C Wasserbadtemperatur polymerisiert werden. Nach etwa 30 Stunden erreicht das Polymerisationsgemisch mit etwa 126°C seine Maximaltemperatur. Nach Entfernung der Polymerisationskammer aus dem Wasserbad wird das Polymerisat entsprechend der Komponente a) in der Polymerisationskammer noch etwa 7 Stunden z. B. bei 117°C im Luftschrank getempert.

### Komponente b)

Die Komponente b) ist ein Schlagzähmodifizierungsmittel auf Basis von vernetzten Poly(meth)acrylaten. Bevorzugt weist die Komponente b) einen zwei- oder dreischaligen Aufbau auf.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 EP-A 0 683 028 und US 3,793,402 beschrieben. Ein geeignetes kommerziell erhältliches Produkt ist z. B. METABLEN® IR 441 der Fa. Mitsubishi Rayon.

### Schlagzähmodifizierungismittel

In der Polymethacrylat-Matrix sind 1 bis 30, bevorzugt 2 bis 20, besonders bevorzugt 3 bis 15, insbesondere 5 bis 12 Gew.-% eines Schlagzähmodifizierungsmittels enthalten. Diese Schlagzähmodifizierungsmittel enthalten eine Elastomerphase, die aus vernetzten Polymerisatteilchen besteht. Das Schlagzähmodifizierungsmittel wird in an sich bekannter Weise durch Perlpolymerisation oder durch Emulsionspolymerisation erhalten.

Im einfachsten Fall handelt es sich um, mittels Perlpolymerisation erhältliche, vernetzte Teilchen mit einer mittleren Teilchengröße im Bereich von 50 bis 500 µm, bevorzugt 80 bis120 µm. Diese bestehen in der Regel aus mindestens 40, bevorzugt 50 - 70 Gew.-% Methylmethacrylat, 20 bis 40, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 5 Gew.-% an C₁-C₄-Alkyl(meth)acrylaten, wie Ethylacrylat oder Butylacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei-, besonders bevorzugt einen dreischichtigen Kern-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen (Durchmesser) dieser Emulsionspolymerisate liegen im Bereich von 100 - 500 nm, bevorzugt 200 - 400 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 bis 40 Gew.-%, besonders bevorzugt im Bereich von 25 bis 35 Gew.-%.

### Komponente c)

Die Komponente c) ist eine optionale Komponente, die allein oder zusammen mit der Komponente d) vorliegen kann.

Die Komponente c) kann in der Monomerzusammensetzung mit der Komponente a) übereinstimmen. Die Herstellung kann weitgehend analog erfolgen mit dem Unterschied, daß man die Polymerisationsparameter so wählt, daß man höhermolekulare Polymerisate erhält. Dies kann z. B. durch eine Absenkung der eingesetzten Molekulargewichtsreglermenge geschehen.

Die Komponente c) ist ein höhermolekulares (Meth)acrylat(co)polymer, charakterisiert durch eine Lösungsviskosität in Chloroform bei 25 °C (ISO 1628 - Teil 6) von größer/gleich 65, bevorzugt 68 bis 75 ml/g.

Dies kann einem Molekulargewicht M_{w} (Gewichtsmittel) von 160000 g/mol (Bestimmung von M_{w} mittels Gelpermeationschromatographie unter Bezug auf Polymethylmethacrylat als Eichstandard) entsprechen. Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente c) kann in der Monomerzusammensetzung mit der Komponente a) übereinstimmen. Die Komponente c) ist bevorzugt ein Copolymer aus Methylmethacrylat, Styrol und Maleinsäureanhydrid.

Geeignete Mengenanteile können z. B. sein:
50 bis 90, bevorzugt 70 bis 80 Gew.-% Methylmethacrylat,
10 bis 20, bevorzugt 12 bis 18 Gew.-% Styrol und
5 bis 15, bevorzugt 8 bis 12 Gew.-% Maleinsäureanhydrid

### Komponente d)

Die Komponente d) ist eine optionale Komponente, die allein oder zusammen mit der Komponente c) eingesetzt / verwendet werden kann.

Die Komponente d) ist ein weiteres von a) verschiedenes (Meth)acrylat(co)polymer, charakterisiert durch eine Lösungsviskosität in Chloroform bei 25 °C (ISO 1628 - Teil 6) von 50 bis 55, bevorzugt 52 bis 54 ml/g.

Dies kann einem Molekulargewicht Mw (Gewichtsmittel) im Bereich von 80.000 bis 200.000 (g/mol), bevorzugt von 100.000 bis 150.000 entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente d) ist ein Homopolymer oder Copolymer aus mindestens 80 Gew.-% Methylmethacrylat und gegebenenfalls bis zu 20 Gew.-% weiteren mit Methylmethacrylat copolymerisierbaren Monomeren.
Die Komponente d) besteht zu 80 bis 100, vorzugsweise zu 90 - 99,5 Gew.-%, aus radikalisch polymerisierten Methylmethacrylat-Einheiten und gegebenenfalls zu 0 - 20, bevorzugt zu 0,5 - 10 Gew.-% aus weiteren radikalisch polymerisierbaren Comonomeren, z. B. C1- bis C4-Alkyl(meth)acrylaten, insbesondere Methylacrylat, Ethylacrylat oder Butylacrylat. Vorzugsweise liegt das mittlere Molekulargewicht M_{w} der Matrix im Bereich von 90.000 g/mol bis 200.000 g/mol, insbesondere 100.000 g/mol bis 150.000 g/mol.

Die Komponente d) ist bevorzugt ein Copolymer aus 95 bis 99,5 Gew.-% Methylmethacrylat und 0,5 bis 5, bevorzugt 1 bis 4 Gew.-% Methylacrylat.

Die Komponente d) kann eine Vicaterweichungstemperatur VET (ISO 306-B50) von mindestens 107, bevorzugt von 108 bis 114 °C aufweisen. Der Schmelzindex MVR (ISO 1133, 230 °C / 3,8 kg) kann z. B. im Bereich von größer/gleich 2,5 cm³/10 min liegen.

### Übliche Zusatz-, Hilfs- und/oder Füllstoffe

Die Polymermischung kann in an sich bekannter Weise noch übliche Zusatz-, Hilfs- und/oder Füllstoffe, wie z. B. Thermostabilisatoren, UV-Stabilisatoren, UV-Absorber, Antioxidantien enthalten.

Für das Spritzgussverfahren sind insbesondere Gleitmittel bzw. Formtrennmittel von Bedeutung, die ein mögliches Anhaften der Polymermischung an die Spritzgussform vermindern bzw. ganz verhindern können.

Als Hilfsstoffe können demnach Gleitmittel, z. B. ausgewählt aus der Gruppe der gesättigten Fettsäuren mit weniger als C₂₀, bevorzugt C₁₆ bis C₁₈ Kohlenstoffatomen oder der gesättigten Fettalkohole mit weniger als C₂₀, bevorzugt C₁₆ bis C₁₈ Kohlenstoffatomen enthalten sein. Bevorzugt sind geringe Mengenanteile von höchstens 0,25, z. B. 0,05 bis 0,2 Gew.-%, bezogen auf die Polymermischung enthalten.

Geeignet sind z. B. Stearinsäure, Palmitinsäure, technische Gemische aus Stearin- und Palmitinsäure. Weiterhin geeignet sind z. B. n-Hexadecanol, n-Octadecanol, sowie technische Gemische aus n-Hexadecanol und n-Octadecanol.

Ein besonders bevorzugtes Gleit- bzw. Formtrennmittel ist Stearylalkohol.

### Spritzgegossener Formkörper

Aus der erfindungsgemäßen Polymermischung lassen sich, in an sich bekannter Weise, im Spritzgussverfahren entsprechende spritzgegossene Formkörper herstellen.

### Verwendungen

Die Polymermischung kann zur Herstellung von spritzgegossenen Formkörpern verwendet werden, die folgende Eigenschaften aufweisen:
I. ein Zugmodul (ISO 527) von mindestens 2600, bevorzugt mindestens 2750, besonders bevorzugt mindestens 2850 MPa,
II. eine Vicaterweichunastemperatur VET (ISO 306-B50) von mindestens 109, bevorzugt mindestens 110, insbesondere mindestens 112, z. B. von 110 bis 118 °C,
III. eine Schlagzähigkeit (ISO 179-2D, flatwise) von mindestens 17, bevorzugt 18 KJ/m², und
IV. einen Schmelzindex MVR (ISO 1133, 230 °C /3,8 kg) von mindestens 1,5, bevorzugt mindestens 1,65 cm³/10 min.

Die spritzgegossenen Formkörper können als Teile von Haushaltsgeräten, Kommunikationsgeräten, Hobby- oder Sportgeräten, Karosserieteile oder Teile von Karosserieteilen im Automobil-, Schiffs- oder Flugzeugbau verwendet werden. Typische Beispiele für Karosserieteile oder Teile von Karosserieteilen von Automobilen sind z. B. Spoiler, Blenden, Dachmodule oder Außenspiegelgehäuse.

### Vorteilhafte Wirkungen der Erfindung

Aus den erfindungsgemäßen Polymermischungen bzw. Formmassen lassen sich Formkörper, insbesondere Spritzgussteile, herstellen, die hohen Materialanforderungen, wie sie z. B. für Automobilaußenteile bestehen, genügen. Dabei ist es gelungen vier besonders wichtige Anforderungen, Zugmodul, Vicaterweichungstemperatur, Schlagzähigkeit, und Schmelzindex gleichzeitig in für Verarbeitung und Anwendung geeigneten Größenordnungen sicherzustellen. Insbesondere bedingt die gute Fließfähigkeit die geforderte Verarbeitbarkeit im Spritzguß auch bei anspruchsvollen Teilegeometrien. Dabei ist es überraschend, daß gleichzeitig Spritzgussteile von ausreichender Zähigkeit, hoher Witterungs- und Temperaturbeständigkeit erhalten werden können. Darüber hinaus werden noch eine Reihe von weiteren wünschenswerten Eigenschaften, wie z. B. Chemikalienresistenz, Gelbwert und Eigenfarbe in durchaus befriedigender Weise erreicht. Über das Mischungsverhältnis der Komponenten a) bis d) kann das Eigenschaftsprofil individuell auf die Anforderungen im Einzelfall eingestellt werden.

### Beispiele

### Herstellung der Komponente a):

Eine Monomermischung aus 6355 g Methylmethacrylat, 1271 g Styrol und 847 g Maleinsäureanhydrid wird mit 1,9 g tert.-Butylperneodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt.
Das resultierende Gemisch wird in eine Polymerisationskammer gefüllt und 10 Minuten entgast. Danach wird im Wasserbad 6 Stunden bei 60°C, nachfolgend 30 Stunden bei 55°C Wasserbadtemperatur polymerisiert. Nach etwa 30 Stunden erreicht das Polymerisationsgemisch mit 126°C seine Maximaltemperatur. Nach Entfernung der Polymerisationskammer aus dem Wasserbad wird das Polymerisat in der Polymerisationskammer noch 7 Stunden bei 117°C im Luftschrank getempert.

Das resultierende Copolymerisat ist klar und nahezu farblos und besitzt eine V.N. (Lösungsviskositätszahl nach ISO 1628-6, 25°C, Chloroform) von 48,7ml/g. Die Fließfähigkeit des Copolymerisats wurde nach ISO 1133 bei 230°C und 3,8kg mit MVR = 3,27 cm³/10min bestimmt.

Die Komponente a) ist das oben beschriebene Copolymerisat aus 75 Gew.-% Methylmethacrylat, 15 Gew.-% Styrol und 10 Gew.-% Maleinsäureanhydrid.

Als Komponente b) wurde eingesetzt: ein handelsübliches Schlagzähmodifizierungsmittel METABLEN^{®} IR 441 der Fa. Mitsubishi Rayon.

Als Komponente c) wurde eingesetzt: Ein handelsübliches Copolymerisat aus 75 Gew.-% Methylmethacrylat, 15 Gew.-% Styrol und 10 Gew.-% Maleinsäureanhydrid mit einer Lösungsviskositätszahl nach ISO 1628-6, 25°C, Chloroform von 68 ml/g

Als Komponente d) wurde eingesetzt: ein handelsübliches Copolymerisat aus 99 Gew.-% Methylmethacrylat und 1 Gew.-% Methylacrylat mit einer Lösungsviskosität in Chloroform bei 25 °C (ISO 1628 -Teil 6) etwa 52 bis 54 ml/g.

### Erfindungsgemäße Beispiele 1 bis 3

### Beispiel 1:

Polymermischung aus:
Komponente a): 50 Gew.-%
Komponente b): 15,6 Gew.-%
Komponente c): -
Komponente d): 34,4 Gew.-%
Gleitmittel : 0,1 Gew.-% n-Octadecanol (bezogen auf die Summe der Komponenten a) bis d))

### Beispiel 2:

Polymermischung aus:
Komponente a): 50 Gew.-%
Komponente b): 13 Gew.-%
Komponente c): 15 Gew.-%
Komponente d): 22 Gew.-%

### Beispiel 3:

Polymermischung aus:
Komponente a): 50 Gew.-%
Komponente b): 13 Gew.-%
Komponente c): 37 Gew.-%
Komponente d): -

### Vergleichsbeispiele (Vbsp. 4- 9))

### Vergleichsbeispiel 4:

Handelsübliche schlagzähmodifizierte Formmasse mit einer Matrix aus 99 Gew.-% Methylmethacrylat und 1 Gew.-% Ethylacrylat, enthaltend 34 Gew.-% eines Schlagzähmodifizierungsmittels.

### Vergleichsbeispiel 5:

Handelsübliche Formmasse aus 96 Gew.-% Methylmethacrylat und 4 Gew.-% Methacrylsäure.

### Vergleichsbeispiel 6:

Handelsübliche Formmasse aus 99 Gew.-% Methylmethacrylat und 1 Gew.-% Methylacrylat, M_{w} von ca. 110.000.

### Vergleichsbeispiel 7:

Handelsübliche schlagzähmodifizierte Formmasse mit einer Matrix aus 99,5 Gew.-% Methylmethacrylat und 0,5 Gew.-% n-Butylacrylat, M_{w} ca. 125.000 (g/mol), enthaltend 20 Gew.-% eines dreiphasigen Schlagzähmodifizierungsmittels.

### Vergleichsbeispiel 8:

Handelsübliche Formmasse aus 99 Gew.-% Methylmethacrylat und 1 Gew.-% Methylacrylat, M_{w} von ca. 110.000 (anderer Hersteller als Vbsp. 6)

### Vergleichsbeispiel 9:

Handelsübliche Formmasse aus 75 Gew.-% Methylmethacrylat, 15 Gew.-% Styrol und 10 Gew.-% Maleinsäureanhydrid mit einer Lösungsviskosität in Chloroform bei 25 °C (ISO 1628 - Teil 6) von 68 ml/g (entspricht der Komponente c) in den Beispielen 1 bis 3).

| Eigenschaft | Bsp.1 | Bsp.2 | Bsp.3 | Vbsp.4 | Vbsp.5 | Vbsp.6 | Vbsp.7 | Vbsp.8 | Vbsp.9 |
|---|---|---|---|---|---|---|---|---|---|
| Zugmodul [MPa] | 2900 | 3000 | 3100 | 1700 | 3500 | 3300 | 2500 | 3300 | 3600 |
| VET [°C] | 111,5 | 115,8 | 118,5 | 93 | 121 | 107 | 105 | 108 | 119 |
| SZ [kJ/m²] | 39 | 28,5 | 20,6 | 70 | 11 | 20 | 53 | 20 | 20 |
| MVR [cm³/10 min] | 3,5 | 2,3 | 1,7 | 0,8 | 2 | 2,8 | 0,9 | 3 | 1,2 |
| TD65/10° [%] | 63 | 58,5 | 52 | 90 | 92 | 92 | 92 | 92 | 90 |
| Gelbwert | 13,09 | 14,46 | 15,87 | n.b. | n.b. | n.b. | n.b. | n.b. | n.b. |
| Chem.resist. Isoprop. | | | | | | | | | |
| Bruchzeit bei | | | | | | | | | |
| Randfaserdehnung [s] | | | | | | | | | |
| 0,39% | > 1800 | > 1800 | > 1800 | n.b. | n.b. | n.b. | n.b. | n.b. | n.b. |
| 0,50% | 722 | 1345 | > 1800 | n.b. | n.b. | n.b. | n.b. | n.b. | n.b. |
| Chem.resist. EtOH/Wasser | | | | | | | | | |
| Bruchzeit bei | | | | | | | | | |
| Randfaserdehnung [s] | | | | | | | | | |
| 0,39% | > 1800 | > 1800 | > 1800 | n.b. | n.b. | n.b. | n.b. | n.b. | n.b. |
| 0,50% | 210 | 777 | > 1800 | n.b. | n.b. | n.b. | n.b. | n.b. | n.b. |
| Ritzhärte nach Taber [µm] | | | | | | | | | |
| 0,7 N | 0 | 0 | 0 | n.b. | n.b. | n.b. | n.b. | n.b. | n.b. |
| 1,5 N | 1,5 | 1,1 | 1,2 | n.b. | n.b. | n.b. | n.b. | n.b. | n.b. |
| 3,0 N | 4,2 | 3,5 | 3,9 | n.b. | n.b. | n.b. | n.b. | n.b. | n.b. |
| Glanzgrad | | | | | | | | | |
| R(60°) [%] | 43,4 | 49,1 | 45,8 | n.b. | n.b. | n.b. | n.b. | n.b. | n.b. |

| | | | | | | | | | |
|---|---|---|---|---|---|---|---|---|---|
| n.b. = nicht bestimmt | | | | | | | | | |

## Patentansprüche

1. Polymermischung, die folgende Komponenten enthält
a) ein niedermolekulares (Meth)acrylat(co)polymer,
charakterisiert durch eine Lösungsviskosität in Chloroform bei 25 °C (ISO 1628 - Teil 6) von kleiner/gleich 55 ml/g
b) ein Schlagzähmodifizierungsmittel auf Basis von vernetzten Poly(meth)acrylaten
c) ein höhermolekulares (Meth)acrylat(co)polymer,
charakterisiert durch eine Lösungsviskosität in Chloroform bei 25 °C (ISO 1628 - Teil 6) von größer/gleich 65 ml/g und/oder
d) ein weiteres von a) verschiedenes (Meth)acrylat(co)polymer,
charakterisiert durch eine Lösungsviskosität in Chloroform bei 25 °C (ISO 1628 - Teil 6) von 50 bis 55 ml/g
wobei die Komponenten a), b), c) und/oder d) jeweils für sich genommen als einzelne Polymere als auch als Mischungen von Polymeren verstanden werden können,
wobei a) b) c) und/oder d) sich zu 100 Gew.-% addieren und in folgenden Mengenverhältnissen vorliegen:
a) 25 bis 75 Gew.-%
b) 10 bis 60 Gew.-%
c) und/oder d) 10 bis 50 Gew.-%,
wobei die Polymermischung noch übliche Zusatz, Hilfs- und/oder Füllstoffe enthalten kann und
wobei ein aus der Polymermischung hergestellter Probekörper gleichzeitig folgende Eigenschaften aufweist:
I. ein Zugmodul (ISO 527) von mindestens 2600 MPa,
II. eine Vicaterweichunastemperatur VET (ISO 306-B50) von mindestens 109 °C,
III. eine Schlagzähigkeit (ISO 179-2D, flatwise) von mindestens 17 KJ/m², und
IV. einen Schmelzindex MVR (ISO 1133, 230°C /3,8 kg) von mindestens 1,5 cm³/10 min.

2. Polymermischung nach Anspruch 1, **dadurch gekennzeichnet, daß** die Komponente a) ein Copolymer aus Methylmethacrylat, Styrol und Maleinsäureanhydrid ist.

3. Polymermischung nach Anspruch 2, **dadurch gekennzeichnet, daß** die Komponente a) ein Copolymer aus
50 bis 90 Gew.-% Methylmethacrylat,
10 bis 20 Gew.-% Styrol und
5 bis 15 Gew.-% Maleinsäureanhydrid ist.

4. Polymermischung nach einem oder mehreren der Ansprüche 1 bis 3, **dadurch gekennzeichnet, daß** die Komponente b) einen zwei- oder dreischaligen Aufbau aufweist.

5. Polymermischung nach einem oder mehreren der Ansprüche 1 bis 4, **dadurch gekennzeichnet, daß** die Komponente c) ein Copolymer aus Methylmethacrylat, Styrol und Maleinsäureanhydrid ist.

6. Polymermischung nach Anspruch 5, **dadurch gekennzeichnet, daß** die Komponente c) ein Copolymer aus
50 bis 90 Gew.-% Methylmethacrylat,
10 bis 20 Gew.% Styrol und
5 bis 15 Gew.-% Maleinsäureanhydrid ist.

7. Polymermischung nach einem oder mehreren der Ansprüche 1 bis 6, **dadurch gekennzeichnet, daß** die Komponente d) ein Homopolymer oder Copolymer aus mindestens 80 Gew.-% Methylmethacrylat und gegebenenfalls bis zu 20 Gew.-% weiteren mit Methylmethacrylat copolymerisierbaren Monomeren ist.

8. Polymermischung nach Anspruch 7, **dadurch gekennzeichnet, daß** die Komponente d) ein Copolymer aus 95 bis 99,5 Gew.-% Methylmethacrylat und 0,5 bis 5 Gew.-% Methylacrylat ist.

9. Polymermischung nach einem oder mehreren der Ansprüche 1 bis 8, **dadurch gekennzeichnet, daß** als Hilfsstoff ein Gleitmittel enthalten ist.

10. Polymermischung nach Anspruch 9, **dadurch gekennzeichnet, daß** als Formtrennmittel Stearylalkohol enthalten ist.

11. Spritzgegossener Formkörper, bestehend aus einer Polymermischung nach einem oder mehreren der Ansprüche 1 bis 10.

12. Verwendung einer Polymermischung nach einem oder mehreren der Ansprüche 1 bis 10 zur Herstellung von spritzgegossenen Formkörpern, die folgende Eigenschaften aufweisen:
I. ein Zugmodul (ISO 527) von mindestens 2600 MPa,
II. eine Vicaterweichungstemperatur VET (ISO 306-B50) von mindestens 109 °C,
III. eine Schlagzähigkeit (ISO 179-2D, flatwise) von mindestens 17 KJ/m², und
IV. einen Schmelzindex MVR (ISO 1133, 230 °C /3,8 kg) von mindestens 1,5 cm³/10 min.

13. Verwendung der spritzgegossenen Formkörper nach Anspruch 11 oder 12 als Teile von Haushaltsgeräten, Kommunikationsgeräten, Hobby- oder Sportgeräten, Karosserieteile oder Teile von Karosserieteilen im Automobil-, Schiffs- oder Flugzeugbau.

## Claims

1. Polymer mixture, which comprises the following components
a) a low-molecular-weight (meth)acrylate(co)-polymer,
**characterized** via a solution viscosity in chloroform at 25°C (ISO 1628 - Part 6) of less than or equal to 55 ml/g
b) an impact modifier based on crosslinked poly(meth)acrylates
c) a relatively high-molecular-weight (meth)-acrylate(co)polymer,
**characterized** via a solution viscosity in chloroform at 25°C (ISO 1628 - Part 6) of greater than or equal to 65 ml/g and/or
d) a further (meth)acrylate(co)polymer other than a),
**characterized by** a solution viscosity in chloroform at 25°C (ISO 1628 - Part 6) of from 50 to 55 ml/g
where each of components a), b), c) and/or d) can be understood as individual polymers or else as mixtures of polymers,
and where the entirety of a), b), c) and/or d) gives 100% by weight and their quantitative proportions present are as follows:
a) from 25 to 75% by weight
b) from 10 to 60% by weight
c) and/of d) from 10 to 50% by weight,
and where the polymer mixture can also comprise conventional additives, auxiliaries and/or fillers and
where a test specimen produced from the polymer mixture simultaneously has the following properties:
I. a tensile modulus (ISO 527) of at least 2600 MPa,
II. a Vicat softening point VSP (ISO 306-B50) of at least 109°C,
III. an impact resistance (ISO 179-2D, flatwise) of at least 17 kJ/m², and
IV. a melt index MVR (ISO 1133, 230°C/3.8 kg) of at least 1.5 cm³/10 min.

2. Polymer mixture according to Claim 1, **characterized in that** component a) is a copolymer composed of methyl methacrylate, styrene and maleic anhydride.

3. Polymer mixture according to Claim 2, **characterized in that** component a) is a copolymer composed of
from 50 to 90% by weight of methyl methacrylate,
from 10 to 20% by weight of styrene and
from 5 to 15% by weight of maleic anhydride.

4. Polymer mixture according to one or more of Claims 1 to 3, **characterized in that** component b) has a two- or three-shell structure.

5. Polymer mixture according to one or more of Claims 1 to 4, **characterized in that** component c) is a copolymer composed of methyl methacrylate, styrene and maleic anhydride.

6. Polymer mixture according to Claim 5, **characterized in that** component c) is a copolymer composed of
from 50 to 90% by weight of methyl methacrylate,
from 10 to 20% by weight of styrene and
from 5 to 15% by weight of maleic anhydride.

7. Polymer mixture according to one or more of Claims 1 to 6, **characterized in that** component d) is a homopolymer or copolymer composed of at least 80% by weight of methyl methacrylate and, if appropriate, up to 20% by weight of further monomers copolymerizable with methyl methacrylate.

8. Polymer mixture according to Claim 7, **characterized in that** component d) is a copolymer composed of from 95 to 99.5% by weight of methyl methacrylate and from 0.5 to 5% by weight of methyl acrylate.

9. Polymer mixture according to one or more of Claims 1 to 8, **characterized in that** a lubricant is present as auxiliary.

10. Polymer mixture according to Claim 9, **characterized in that** stearyl alcohol is present as mould-release agent.

11. Injection moulding, composed of a polymer mixture according to one or more of Claims 1 to 10.

12. Use of a polymer mixture according to one or more of Claims 1 to 10 for production of injection mouldings which have the following properties:
I. a tensile modulus (ISO 527) of at least 2600 MPa,
II. a Vicat softening point VSP (ISO 306-B50) of at least 109°C,
III. an impact resistance (ISO 179-2D, flatwise) of at least 17 kJ/m², and
IV. a melt index MVR (ISO 1133, 230°C/3.8 kg) of at least 1.5 cm³/10 min.

13. Use of the injection mouldings according to Claim 11 or 12 as parts of household devices, of communication devices, of hobby devices or of sports devices, or as bodywork parts or parts of bodywork parts in the construction of automobiles, of ships or of aircraft.

## Revendications

1. Mélange polymère qui contient les composants suivants :
a) un (co)polymère (méth)acrylique de faible poids moléculaire,
**caractérisé par** une viscosité en solution dans du chloroforme à 25°C (ISO 1628 - partie 6) inférieure/égale à 55 ml/g,
b) un agent de modification de la résistance aux chocs à base de poly(méth)acrylates réticulés,
c) un (co)polymère (méth)acrylique de poids moléculaire élevé,
**caractérisé par** une viscosité en solution dans du chloroforme à 25°C (ISO 1628 - partie 6) supérieure/égale à 65 ml/g et/ou
d) un autre (co)polymère (méth)acrylique différent de a),
**caractérisé par** une viscosité en solution dans du chloroforme à 25°C (ISO 1628 - partie 6) de 50 à 55 ml/g,
les composants a), b), c) et/ou d) pouvant, individuellement, être entendus comme des polymères individuels ainsi que comme des mélanges de polymères,
a), b), c) et/ou d) s'ajoutant pour donner 100 % en poids et se présentant dans les proportions suivantes :
a) 25 à 75 % en poids,
b) 10 à 60 % en poids,
c) et/ou d) 10 à 50 % en poids,
le mélange polymère pouvant encore contenir des additifs, adjuvants et/ou charges courants,
un échantillon préparé à partir du mélange polymère présentant simultanément les propriétés suivantes :
I. un module de traction (ISO 527) d'au moins 2600 MPa,
II.une température de ramollissement de Vicat VET (ISO 306-B50) d'au moins 109°C,
III. une résistance aux chocs (ISO 179-2D, flatwise) d'au moins 17 kJ/m², et
IV.un indice de fusion MVR (ISO 1133, 230°C/3,8 kg) d'au moins 1,5 cm³/10 min.

2. Mélange polymère suivant la revendication 1, **caractérisé en ce que** le composant a) est un copolymère de méthacrylate de méthyle, de styrène et d'anhydride maléique.

3. Mélange polymère suivant la revendication 2, **caractérisé en ce que** le composant a) est un copolymère composé
de 50 à 90 % en poids de méthacrylate de méthyle,
de 10 à 20 % en poids de styrène et
de 5 à 15 % en poids d'anhydride maléique.

4. Mélange polymère suivant une ou plusieurs des revendications 1 à 3, **caractérisé en ce que** le composant b) présente une structure à deux ou trois enveloppes.

5. Mélange polymère suivant une ou plusieurs des revendications 1 à 4, **caractérisé en ce que** le composant c) est un copolymère de méthacrylate de méthyle, de styrène et d'anhydride maléique.

6. Mélange polymère suivant la revendication 5, **caractérisé en ce que** le composant c) est un copolymère composé
de 50 à 90 % en poids de méthacrylate de méthyle,
de 10 à 20 % en poids de styrène et
de 5 à 15 % en poids d'anhydride maléique.

7. Mélange polymère suivant une ou plusieurs des revendications 1 à 6, **caractérisé en ce que** le composant d) est un homopolymère ou copolymère composé d'au moins 80 % en poids de méthacrylate de méthyle et éventuellement de jusqu'à 20 % en poids d'autres monomères copolymérisables avec du méthacrylate de méthyle.

8. Mélange polymère suivant la revendication 7, **caractérisé en ce que** le composant d) est un copolymère composé de 95 à 99,5 % en poids de méthacrylate de méthyle et de 0,5 à 5 % en poids d'acrylate de méthyle.

9. Mélange polymère suivant une ou plusieurs des revendications 1 à 8, **caractérisé en ce qu'**un lubrifiant est contenu comme adjuvant.

10. Mélange polymère suivant la revendication 9, **caractérisé en ce que** de l'alcool stéarylique est contenu comme agent de démoulage.

11. Corps façonnés moulés par injection, constitués d'un mélange polymère suivant une ou plusieurs des revendications 1 à 10.

12. Utilisation d'un mélange polymère suivant une ou plusieurs des revendications 1 à 10, pour la préparation de corps façonnés moulés par injection, qui présentent les propriétés suivantes :
I. un module de traction (ISO 527) d'au moins 2600 MPa,
II.une température de ramollissement de Vicat VET (ISO 306-B50) d'au moins 109°C,
III. une résistance aux chocs (ISO 179-2D, flatwise) d'au moins 17 kJ/m², et
IV.un indice de fusion MVR (ISO 1133, 230°C/3,8 kg) d'au moins 1,5 cm³/10 min.

13. Utilisation des corps façonnés moulés par injection suivant la revendication 11 ou 12, comme parties d'appareils ménagers, d'appareils de communication, d'appareils de loisir ou de sport, de pièces de carrosserie ou parties de pièces de carrosserie dans la construction automobile, navale ou aéronautique.
